# FASCICULE DE BREVET EUROPEEN

(11) **EP 2 896 607 B1**
(45) Date de publication et mention de la délivrance du brevet: **24.08.2016**
(21) Numéro de dépôt: 14200311.0
(22) Date de dépôt: 24.12.2014
(51) Int. Cl.: C04B 35/571, C04B 35/626, C04B 35/628, C04B 35/80

(54) **PROCÉDÉ DE FABRICATION D'UNE PIÈCE EN MATÉRIAU COMPOSITE CF/SIC À PARTIR D'UNE SUSPENSION COLLOIDALE**
Herstellungsverfahren eines Bauteils aus Cf/SiC-Verbundmaterial auf der Basis einer kolloidalen Suspension
Method for producing a part made of Cf/SiC composite material from a colloidal suspension

(30) Priorité: 27.12.2013 FR 1363660
(43) Date de publication de la demande: 22.07.2015
(73) Titulaire: Commissariat à l'Énergie Atomique et aux Énergies Alternatives, 75015 Paris (FR)
(72) Inventeur: Teyssier, Laurent, 92190 Meudon (FR)
(74) Mandataire: Brevalex

(56) Documents cités:
- US-A1- 2010 009 143
- US-A1- 2011 200 748
- E. MÜLLER ET AL: "Studies on a Novel Route to C/SiC", ADVANCED ENGINEERING MATERIALS, vol. 6, no. 7, 1 juillet 2004 (2004-07-01) , pages 568-572, XP055141755, ISSN: 1438-1656, DOI: 10.1002/adem.200400404
- DITTRICH R ET AL: "C/SiC COMPOSITES BY ELECTROPHORETICAL INFILTRATION", PROCEEDINGS OF THE ASME MULTIFUNCTIONAL NANOCOMPOSITES INTERNATIONAL CONFERENCE - 2006 : PRESENTED AT THE 2006 MULTIFUNCTIONAL NANOCOMPOSITES INTERNATIONAL CONFERENCE , SEPTEMBER 20 - 22, 2006, HONOLULU, HAWAII, USA / SPONSORED BY ASME NANOTECHNOLOGY, 20 septembre 2006 (2006-09-20), pages 65-68, XP008172253, ISBN: 978-0-7918-4761-9

## Description

### DOMAINE TECHNIQUE

La présente invention se rapporte au domaine des composites à matrice céramique (CMC), et plus particulièrement aux matériaux composites C_{f}/SiC, qui sont des matériaux à matrice céramique de carbure de silicium renforcée par des fibres de carbone.

L'invention se rapporte plus particulièrement à un procédé de fabrication d'une pièce en un matériau composite C_{f}/SiC.

L'invention est susceptible d'être utilisée dans de nombreux domaines et est particulièrement utile pour les applications à hautes températures (de 600 à 1000°C) et à très hautes températures (de 1000 à 1600°C). L'invention est notamment susceptible d'être utilisée dans les domaines tels que l'aéronautique, l'aérospatiale et l'industrie automobile pour la réalisation de pièces (tuyères, aubes de turbine, volets, moteurs de fusées, systèmes de protections thermiques, systèmes de freinage, etc.).

### ÉTAT DE LA TECHNIQUE ANTÉRIEURE

A l'heure actuelle, il existe de nombreux procédés de fabrication de composites C_{f}/SiC.

L'infiltration chimique en phase vapeur (CVI pour « Chemical Vapor Infiltration » en anglais) d'une préforme est un procédé lent et coûteux. En outre, le composite ainsi obtenu présente, au mieux, une porosité résiduelle de 15 % environ.

L'imprégnation de polymère et pyrolyse (PIP pour « Polymer Impregnation and Pyrolysis » en anglais) est lui aussi un procédé lent. En effet, il nécessite un nombre élevé de cycles imprégnation/pyrolyse pour obtenir un composite présentant une densité de 85 %.

Le procédé NITE (acronyme de « Nano-Infiltration and Transient Eutectics » en anglais) (document **[1]**) est basé sur l'infiltration d'une préforme par une suspension comprenant une nanopoudre de SiC, en présence de composés d'aide au frittage (Al₂O₃, Y₂O₃), suivie d'une densification à une température d'environ 1780°C sous une pression comprise entre 150 et 200 bars. L'inconvénient de cette technique est que la présence de phases secondaires oxydes limite la conductivité thermique et augmente l'activité neutronique du matériau ainsi élaboré.

Le procédé SITE (acronyme de « Slip Infiltration and Transient Eutectics » en anglais) (document **[2]**) se rapproche du procédé NITE, à la différence que l'infiltration de nanopoudre de SiC est effectuée par électrophorèse et des composés d'aide au frittage sont ensuite imprégnés en phase liquide. La densification du composite se fait à 1400°C sous argon. L'inconvénient de cette technique est, comme dans le cas du procédé NITE, la présence de phases oxydes secondaires qui sont néfastes à des propriétés thermomécaniques optimales des composites ainsi élaborés.

Enfin, le procédé SITE-P (document **[3]**), qui est une variante du procédé SITE, consiste en une infiltration de nanopoudre de SiC par électrophorèse, suivie de l'imprégnation (réalisée sous vide) d'un polymère précéramique, précurseur de SiC. La densification du composite est obtenue par pyrolyse du polymère précéramique à 1600°C, qui se décompose en SiC. La densité atteinte après une imprégnation est égale à 67% de la densité théorique. Six imprégnations sont nécessaires pour atteindre une densité relative satisfaisante (86,5%), ainsi qu'une bonne conductivité thermique (60 W/m.K à température ambiante). La porosité résiduelle dans le composite après six imprégnations est de 14%.

Les articles de E. MÜLLER ET AL: "Studies on a Novel Route to C/SiC", ADVANCED ENGINEERING MATERIALS, vol. 6, no. 7, 1 juillet 2004 (2004-07-01), pages 568-572, et de DITTRICH R ET AL: "C/SiC COMPOSITES BY ELECTROPHORETICAL INFILTRATION", PROCEEDINGS OF THE ASME MULTIFUNCTIONAL NANOCOMPOSITES INTERNATIONAL CONFERENCE - 2006 : PRESENTED AT THE 2006 MULTIFUNCTIONAL NANOCOMPOSITES INTERNATIONAL CONFERENCE , SEPTEMBER 20 - 22, 2006, HONOLULU, HAWAII, USA / SPONSORED BY ASME NANOTECHNOLOGY, 20 septembre 2006 (2006-09-20), pages 65-68, montrent les deux un procédé avec les étapes de fabrication d'une préforme poreuse de fibres de C, la préparation d'une dispersion colloïdale comprenant des particules de SiC submicroniques, l'infiltration de la préforme avec la dispersion colloïdale par électrophorèse et un traitement thermique à 2100°C.

La porosité résiduelle présente dans les composites C_{f}/SiC, inhérente aux procédés de fabrication décrits ci-dessus, est nocive à la conductivité thermique et aux propriétés mécaniques de ces composites. En outre, la conductivité thermique d'un matériau diminue lorsque la température augmente. On constate donc qu'il est important de réduire au maximum la porosité résiduelle des composites C_{f}/SiC, en particulier s'ils doivent pouvoir être utilisables à hautes températures, voire à très hautes températures. L'inventeur s'est donc fixé pour objectif de concevoir un procédé de fabrication d'un composite C_{f}/SiC qui soit plus rapide, plus simple et moins coûteux à mettre en oeuvre que les procédés de l'art antérieur, tout en permettant de diminuer la porosité résiduelle des composites C_{f}/SiC.

### EXPOSÉ DE L'INVENTION

Cet objectif est atteint grâce à un procédé de fabrication d'une pièce en matériau composite à matrice céramique du type C_{f}/SiC qui comprend un renfort fibreux en carbone densifié par une matrice SiC, le procédé comprenant successivement :
a) une mise en contact d'une préforme de la pièce à fabriquer avec une dispersion colloïdale, la préforme comprenant des fibres de carbone et la dispersion colloïdale comprenant des particules de SiC de tailles submicrométriques ou nanométriques, dispersées dans au moins un solvant, et un précurseur liquide de céramique SiC;
b) une infiltration, par électrophorèse, des particules de SiC et du précurseur de céramique SiC contenus dans la dispersion colloïdale, dans la préforme ;
c) une densification de la préforme infiltrée par traitement thermique pour décomposer le précurseur de céramique en céramique SiC, moyennant quoi on obtient la pièce en matériau composite à matrice céramique.

Cette manière de procéder permet d'améliorer la qualité de l'infiltration électrophorétique de la poudre de SiC dans les torons (ensemble de fibres).

Pour réaliser l'électrophorèse, on applique, de manière connue en soi, un champ électrique dans la suspension. Les particules chargées de SiC vont alors se déplacer vers et infiltrer (c'est-à-dire combler la porosité) le renfort fibreux en carbone (plaque ou tissu de fibres), qui est utilisé comme électrode. Le précurseur de céramique va lui aussi se déplacer vers et infiltrer le renfort fibreux et, sous l'action d'un traitement thermique, de préférence une pyrolyse, le précurseur va se décomposer en SiC et ainsi densifier encore un peu plus le composite.

Dans ce qui précède et ce qui suit, on entend par « dispersion colloïdale » une suspension liquide dans laquelle sont dispersées des particules solides (en l'occurrence des particules de SiC) dont la taille est inférieure à 1 µm.

Dans ce qui précède et ce qui suit, le terme « taille », appliqué à des particules désigne la plus grande dimension de ces particules ; le terme « nanométrique » signifie supérieur ou égal à 1 nanomètre et inférieur ou égal à 100 nanomètres ; le terme « submicrométrique » signifie supérieur à 100 nanomètres et inférieur à 1000 nanomètres.

On rappelle par ailleurs que le terme « particule » désigne un élément dont le rapport entre sa plus grande dimension et sa plus petite dimension est compris entre 1 et 1,2.

La taille des particules (granulométrie) est choisie en fonction des interstices caractéristiques du renfort fibreux. La poudre de céramique est composée de particules ayant un diamètre entre 5 et 10 fois plus petit que la taille des interstices du renfort.

De préférence, le ou les solvants utilisés pour réaliser la dispersion colloïdale sont des solvants non aqueux. En effet, bien que l'eau ait l'avantage d'être écologique et d'avoir une constante diélectrique élevée (ce qui est bénéfique pour la mobilité électrophorétique), elle est déconseillée du fait de la réaction d'autoprotolyse de l'eau qui a lieu aux électrodes au cours de l'électrophorèse, ce qui conduit à la formation de bulles qui peuvent perturber la densification de la préforme.

Le précurseur liquide de céramique SiC est un polymère précéramique, qui se transforme en SiC par pyrolyse. De préférence, il s'agit de l'allylhydridopolycarbosilane ou AHPCS.

Avantageusement, le procédé comprend la préparation de la dispersion colloïdale.

Selon une première variante du procédé, la préparation de la dispersion colloïdale comprend successivement :
- la dispersion des particules de SiC dans un solvant dans lequel les particules de SiC sont dispersibles et dans lequel le précurseur liquide est soluble ; et
- la solubilisation du précurseur liquide dans ledit solvant.

Selon une seconde variante du procédé, la préparation de la dispersion colloïdale comprend successivement :
- la dispersion des particules de SiC dans un mélange de deux solvants miscibles : un premier solvant dans lequel les particules de SiC sont dispersibles, et un deuxième solvant dans lequel le précurseur liquide est soluble ;
- la solubilisation du précurseur liquide dans le mélange de solvants comprenant les particules de SiC. Avantageusement, le premier solvant est l'éthanol et le second solvant est le toluène, les premier et deuxième solvants étant dans des proportions 55/45 en volume.

Cette seconde variante est utile lorsque le précurseur céramique n'est pas soluble dans le solvant utilisé pour disperser les particules de SiC. Dans ce cas, on préfère utiliser un mélange d'éthanol et de toluène. L'éthanol est un solvant organique classique pour réaliser des infiltrations électrophorétiques, qui permet une bonne dispersion du SiC du fait de sa constante diélectrique élevée. Le toluène, quant à lui, est utilisé pour solubiliser le précurseur céramique. Il a fallu trouver la bonne proportion de toluène à ajouter à l'éthanol, afin d'avoir la plus grosse proportion d'éthanol dans le mélange tout en garantissant une bonne solubilisation du précurseur céramique. Après différents tests, il s'est avéré qu'il était préférable d'avoir au moins 45 % en volume de toluène pour bien dissoudre le précurseur céramique. On pourrait augmenter cette proportion de toluène, mais cela diminuerait l'efficacité de l'infiltration : le toluène a une constante diélectrique plus faible que l'éthanol, donc la migration électrophorétique des particules diminue lorsque la proportion en toluène augmente. Les proportions préférées de l'éthanol et du toluène dans le mélange sont donc 55/45 en volume.

Avantageusement, la dispersion des particules de SiC dans le solvant dans lequel les particules de SiC sont dispersibles comprend :
- l'introduction, sous agitation, de tout ou partie des particules de SiC dans ledit solvant ;
- l'arrêt de l'agitation et l'application d'ultrasons audit solvant comprenant les particules de SiC ; et éventuellement
- l'arrêt des ultrasons et l'application d'une agitation magnétique audit solvant comprenant les particules de SiC ;
et, s'il reste des particules de SiC à introduire dans le solvant, la répétition une ou plusieurs fois de l'enchainement des opérations ci-dessus. Les opérations sont ainsi répétées jusqu'à ce que la totalité des particules de SiC ait été introduite dans le solvant. De préférence, l'introduction des particules de SiC se fait en deux fois.

Avantageusement, la solubilisation du précurseur liquide dans le solvant dans lequel le précurseur liquide est soluble comprend :
- l'introduction, sous agitation, de tout ou partie du précurseur liquide dans ledit solvant ;
- l'arrêt de l'agitation et l'application d'ultrasons audit solvant ; et éventuellement
- l'arrêt des ultrasons et l'application d'une agitation magnétique audit solvant ;
et, s'il reste du précurseur liquide à introduire dans le solvant, la répétition une ou plusieurs fois de l'enchainement des opérations ci-dessus.

De préférence, pour les étapes de dispersion et du solubilisation, l'application d'ultrasons est réalisée pendant une durée comprise entre 1 et 10 minutes, de préférence 5 minutes, à une puissance comprise entre 170 et 310 W et l'éventuelle application d'une agitation magnétique est réalisée en appliquant une vitesse d'agitation comprise entre 300 et 600 tours/minute pendant une durée comprise entre 30 et 90 minutes, de préférence à température ambiante.

L'application des ultrasons permet une bonne désagrégation des amas de particules de SiC dans la suspension. L'application des ultrasons est limitée à 10 minutes, car ils produisent un dégagement de chaleur qui pourrait, s'il était maintenu plus longtemps, provoquer l'évaporation du ou des solvants de la dispersion. De même, l'application de l'agitation magnétique est de préférence réalisée à température ambiante (18 à 25°C) afin d'éviter l'évaporation du ou des solvants de la dispersion. En appliquant une vitesse d'agitation comprise entre 300 et 600 tours/minute, on obtient un vortex suffisant au sein de la suspension qui, au bout d'une durée d'agitation comprise entre 30 et 90 min, permet d'obtenir une meilleure viscosité de la dispersion.

Avantageusement, la dispersion colloïdale comprend, en pourcentages massiques rapportés à la masse totale de la dispersion, 40 à 60% de particules de SiC, de préférence 50 à 55%. Il est bien connu de la littérature que, plus la concentration initiale en poudre dans une dispersion est élevée, plus l'infiltration électrophorétique est efficace. Cependant, plus la teneur en poudre est élevée, et plus le potentiel zeta diminue (il est de plus en plus difficile de stabiliser une dispersion avec une teneur croissante en poudre). Une teneur de SiC comprise entre 40 à 60% en poids, de préférence 50 à 55%, est un bon compromis : c'est une teneur relativement élevée, avec un bon potentiel zeta (> 50 mV), ce qui laisse de la marge pour ajouter le précurseur céramique dans la dispersion sans obtenir un potentiel zeta catastrophique. A titre d'exemple, une dispersion comprenant 50% en poids de SiC a un potentiel zeta supérieur à 50 mV et, après ajout du polymère, le potentiel zeta est typiquement entre 20 et 30 mV, ce qui reste correct.

La dispersion colloïdale peut comprendre, outre les particules de SiC, le précurseur liquide de céramique et au moins un solvant, un dispersant et/ou un liant.

L'ajout d'un liant permet notamment d'améliorer la qualité du revêtement en surface du composite, la qualité étant améliorée en optimisant la quantité du liant.

Le dispersant est un composé qui va réagir à la surface des particules de SiC, afin de créer des phénomènes de répulsions électro-stériques entre les particules. Les polymères sont généralement de bons dispersants car ils fournissent une répulsion stérique entre les particules (en plus de la répulsion électrique) ; on a donc une répulsion qui est meilleure, ce qui a pour effet que la stabilisation de la suspension est, elle aussi, meilleure.

Le dispersant est choisi parmi les dispersants connus, par exemple l'huile de menhaden, l'hypermer^{®} KD1 commercialisé par la société ICI Americas, Inc., le polyvinylpyrrolidone ou l'hydroxyde de tétraméthylammonium (TMAH). De préférence, on utilise le polyéthylènimine comme dispersant, car il permet de bonnes répulsions électro-stériques (électrostatiques et stériques). Le liant est quant à lui choisi parmi les liants conventionnellement utilisés au cours de la préparation d'une dispersion colloïdale, par exemple le polyvinylbutyral, le polyvinylpyrrolidone ou l'alcool polyvinylique. Le liant peut être ajouté dans des quantités comprises généralement entre 2 et 8% en poids par rapport à la masse de SiC introduite. Au-delà, la suspension risque de devenir trop visqueuse.

Comme après l'ajout des particules de SiC et du précurseur de céramique dans la suspension, la suspension est de préférence soumise à une agitation à l'aide d'ultrasons (pointe à ultrasons) après l'ajout du liant, pendant une durée comprise entre 1 et 10 minutes, de préférence 5 minutes, à une puissance comprise entre 170 et 310 W et éventuellement à une agitation magnétique en appliquant une vitesse d'agitation comprise entre 300 et 600 tours/minute pendant une durée comprise entre 30 et 90 minutes, de préférence à température ambiante.

De préférence, la dispersion colloïdale est dégazée dans une enceinte sous vide, afin d'éliminer des bulles d'air présentes au sein de la suspension.

Avantageusement, l'étape b) d'infiltration par électrophorèse comprend l'application d'une tension entre 10 et 100 V/cm pendant une durée allant de 1 à 10 minutes.

Avantageusement, le procédé objet de l'invention comprend en outre, avant l'étape a), une étape de mise en contact, par exemple par trempage, de la préforme avec ledit au moins un solvant de la dispersion colloïdale pendant au moins 12 heures. Cette étape permet d'améliorer la mouillabilité de la préforme, ce qui permet au final d'améliorer l'infiltration électrophorétique.

Avantageusement, l'étape c) de densification par traitement thermique comprend une pyrolyse réalisée à une température comprise entre 1400 et 1700°C et pendant une durée comprise entre 1 et 3 heures.

Préférentiellement, la température de pyrolyse est atteinte en chauffant la préforme infiltrée à une vitesse comprise entre 0,5°C/min et 4°C/min.

Selon un mode de réalisation préféré, la pyrolyse est réalisée à une température de 1600°C, la température de pyrolyse étant atteinte en chauffant la préforme infiltrée à une vitesse de 1°C/min.

Le procédé objet de l'invention peut comprendre, entre l'étape b) d'infiltration et l'étape c) de densification, une étape de séchage de la préforme infiltrée. Cette étape de séchage permet d'évacuer le ou les solvants provenant de la suspension.

Selon une variante avantageuse du procédé, il est possible d'augmenter une durée de l'étape d'infiltration de manière à obtenir un revêtement en surface du renfort. L'épaisseur du revêtement dépend de la durée de la phase électrophorétique du procédé.

### BRÈVE DESCRIPTION DES DESSINS

La figure 1 représente un schéma du montage utilisé pour procéder à l'étape électrophorétique du procédé objet de l'invention.
Les figures 2a et 2b sont des clichés obtenus par microscopie optique d'un composite C_{f}/SiC élaboré selon le procédé objet de l'invention selon une vue en coupe.
La figure 3 est un cliché d'un composite C_{f}/SiC ayant un revêtement de SiC élaboré selon le procédé objet de l'invention.

### EXPOSÉ DÉTAILLÉ D'UN MODE DE RÉALISATION PARTICULIER

Le composite C_{f}/SiC réalisé selon le procédé objet de l'invention permet la réalisation de pièces en composite pouvant être utilisées dans de nombreux domaines d'application.

De manière connue en soi, pour obtenir une pièce d'une forme particulière, on adapte la forme du renfort (plaque, tissu, etc.) en fonction de la forme de la pièce que l'on souhaite obtenir, avant de procéder à l'infiltration du renfort. Le renfort, quant à lui, est réalisé par tressage ou tissage de fibres, également appelées torons, chaque fibre étant formées de plusieurs fils.

Le procédé de fabrication qui se rapproche le plus du procédé objet de l'invention est le procédé SITE-P, qui permet la fabrication de composites C_{f}/SiC par électrophorèse et qui comporte trois étapes principales distinctes et successives, à savoir :
i) une infiltration d'une préforme de fibres de carbone par électrophorèse d'une poudre de SiC se présentant sous la forme d'une dispersion colloïdale ;
ii) une imprégnation, réalisée sous vide, du polymère précéramique ;
iii) une densification du matériau obtenu à l'issue de l'étape ii) par pyrolyse du polymère imprégné (T > 1400°C).

Le procédé objet de l'invention se démarque du procédé SITE-P en ce que l'étape d'infiltration du SiC et l'étape d'imprégnation du polymère précéramique sont réalisées simultanément. D'autre part, l'étape d'imprégnation n'a pas besoin d'être réalisée sous vide, ce qui a pour avantage de simplifier le dispositif expérimental requis et diminue la durée du procédé de fabrication du composite.

Contrairement à ce que l'on pourrait penser, il n'était pas évident, pour un homme du métier, de combiner les étapes d'infiltration électrophorétique et d'imprégnation du procédé SITE-P pour parvenir au procédé objet de l'invention.

En effet, afin de réaliser l'imprégnation du polymère précéramique en même temps que l'infiltration électrophorétique de la poudre de SiC, le polymère est inclus dans la formulation de la dispersion colloïdale de SiC qui est utilisée pour l'électrophorèse. Or, lorsqu'on réalise une dispersion colloïdale, on cherche généralement à ce qu'elle soit la plus stable possible, c'est-à-dire que les particules qu'elle contient soient les plus mobiles possibles.

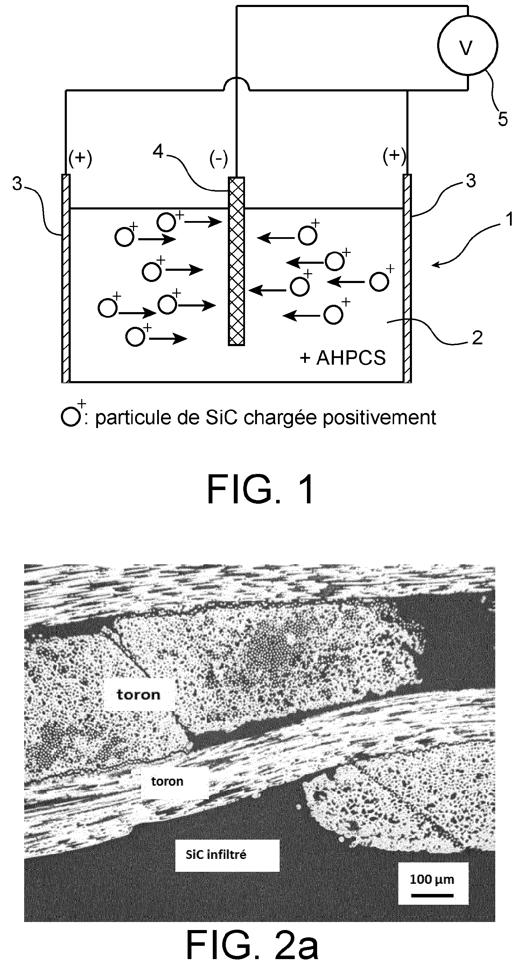

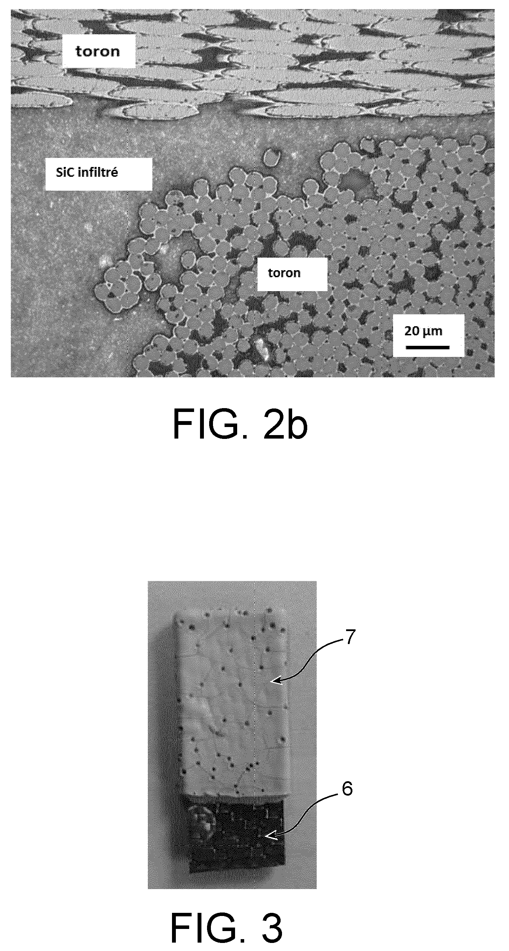

Dans la littérature, il est généralement admis qu'une dispersion colloïdale est stable lorsque son potentiel zeta est au minimum de 30 mV (document **[4]).** Or, en ajoutant le précurseur précéramique (qui est ici un polymère) dans la dispersion colloïdale, on déstabilise fortement la dispersion. A titre d'illustration, dans l'exemple de réalisation qui sera décrit en détail ci-après, une dispersion colloïdale contenant 50% en poids d'une poudre de SiC dans un mélange EtOH/Toluène avec 1,2 mg de dispersant par m² de surface spécifique de SiC (1,2 mg/m²_{SiC}) présente, avant l'ajout du polymère précéramique, un potentiel zeta égal à environ 58 mV (la suspension est donc très stable). Après l'ajout de 4 g de polymère dans la suspension, cette valeur chute à 26 mV, soit une valeur inférieure à 30 mV qui est, dans l'art antérieur, considéré comme étant la valeur limite de stabilité des suspensions colloïdales. Or, de manière étonnante et malgré le potentiel zeta inférieur à la valeur limite de 30 mV, on obtient avec le procédé objet de l'invention une infiltration de très bonne qualité, comme le montrent les clichés des figures 2a et 2b qui seront discutées plus en détails ci-dessous.

Pour illustrer le procédé objet de l'invention, nous allons à présent décrire en détails un exemple de fabrication d'un composite C_{f}/SiC selon l'invention.

### a) élaboration de la dispersion colloïdale de SiC :

On commence par dissoudre un dispersant dans un solvant adéquat en agitant le mélange, par exemple à l'aide d'ultra-sons.

Le dispersant utilisé est un polymère qui va réagir à la surface des particules de SiC, afin de créer des phénomènes de répulsions électro-stériques entre les particules, menant ainsi à la stabilisation de la suspension colloïdale.

Dans notre exemple de réalisation, on choisit de dissoudre environ 1 mg de polyéthylènimine (PEI) par m² de surface spécifique de SiC dans de l'éthanol absolu (EtOH).

L'éthanol est le solvant le plus utilisé dans les procédés électrophorétique non-aqueux ; le dispersant PEI est, quant à lui, très utilisé dans les procédés électrophorétiques, mais tout autre dispersant permettant une bonne stabilisation de la suspension (c'est-à-dire permettant d'obtenir une dispersion présentant un potentiel zeta d'au moins 20 mV, et de préférence d'au moins 30 mV) pourrait également convenir.

Le précurseur de céramique que l'on envisage d'utiliser est un polymère précéramique, l'allylhydridopolycarbosilane ou AHPCS, commercialisé par la société Starfire Systems sous la référence SMP-10.

Ce polymère précéramique n'étant pas soluble dans l'éthanol, on ajoute un deuxième solvant au mélange PEI/EtOH, ce solvant étant choisi de manière à ce que le polymère y soit soluble. Selon le fournisseur, le polymère AHPCS n'est soluble que dans les hexanes, le toluène et le tétrahydrofurane (THF). Tous ces solvants pourraient donc convenir, mais il est préférable d'utiliser le toluène, l'inventeur ayant réalisé des études de mouillabilité et le toluène s'étant avéré être le solvant le plus adéquat (le plus mouillant) pour solubiliser le polymère AHPCS.

Le deuxième solvant ajouté au mélange est donc le toluène et il est ajouté de manière à ce que le mélange EtOH/Toluène soit dans des proportions d'environ 55/45 en pourcentage volumique.

On ajoute progressivement 50% en poids d'une poudre de SiC submicronique (taille de particules 0,9 µm) (référence Sintex 10C de chez Saint-Gobain) à la suspension sous agitation (par exemple, une agitation magnétique). L'agitation permet de rendre la suspension homogène.

La poudre de SiC est une charge (« filler » en anglais) passive, permettant, d'une part, de limiter le phénomène de retrait ayant lieu lors des étapes de séchage et de pyrolyse, et d'autre part, de promouvoir la croissance cristalline du SiC (et plus particulièrement du bêta siliciure de carbone (β-SiC)) issu de la pyrolyse du polymère précéramique pendant l'étape de pyrolyse.

Quelques gouttes d'acide acétique (CH₃COOH) sont ajoutées à la suspension afin d'avoir un pH d'environ 9. Le pH est un paramètre très important dans les suspensions colloïdales. En effet, pour avoir une mobilité électrophorétique maximale, les particules doivent développer un maximum de charges à leur surface, ce qui est possible en se plaçant à un pH assez éloigné du pH du point iso-électrique (PIE) du matériau des particules SiC, c'est-à-dire le pH pour lequel le matériau présente un pouvoir électrique neutre. Les expériences réalisées par l'inventeur ont montré qu'il était préférable de se placer à un pH situé entre 8,9 et 9. Ces expériences ont également permis de montrer qu'il est préférable d'éviter d'utiliser certains acides, comme l'acide chlorhydrique, qui conduisent à la formation de bulles dans la matrice du composite.

La suspension ainsi obtenue est ensuite mélangée à l'aide d'une pointe à ultrasons (par exemple une pointe à ultrasons de la marque IKA) pendant 4 minutes à 40% de la puissance maximale de l'appareil (qui est de 600 W/cm²) afin de bien homogénéiser la suspension.

En pratique, il est préférable de réaliser l'ajout du SiC en deux fois, avec ajout d'acide acétique et traitement ultrasonique intermédiaires, afin d'éviter que la suspension ne devienne trop visqueuse.

La suspension est ensuite mélangée sous agitation magnétique pendant au moins 1 heure, ce qui permet de fluidifier légèrement la suspension.

Le polymère précéramique (AHPCS) est alors ajouté à la suspension, dans des proportions allant de 2 à 6 g d'AHPCS pour 40 ml de suspension.

La suspension est une nouvelle fois traitée par des ultrasons à l'aide d'une pointe à ultrasons pendant 4 minutes à 40% de sa puissance maximale. A ce stade, il faut veiller à ce que la chaleur dégagée par le traitement ultrasonique ne fasse pas figer la suspension.

La suspension est à nouveau mélangée sous agitation magnétique pendant au moins 1 heure.

La qualité de la suspension colloïdale ainsi obtenue peut être caractérisée en termes de viscosité et de stabilité.

Pour mesurer la viscosité, on utilise par exemple un rhéomètre Brookfield DV-II+, en mesurant la viscosité de la dispersion colloïdale pour différents taux de cisaillement.

Pour mesurer la stabilité, on peut réaliser la mesure du potentiel zeta à l'aide d'un dispositif « ZetaProbe » de Colloidal Dynamics : plus le potentiel zeta de la suspension sera élevé, plus la suspension sera stable.

Dans le cadre de la présente invention, la dispersion colloïdale utilisée pour réaliser l'électrophorèse a une viscosité la plus faible possible, inférieure à 75 cp pour un taux de cisaillement de 20 s⁻¹, de préférence inférieure à 30 cp (0,03 Pa.s), et un potentiel zeta d'au moins 20 mV.

Enfin, la suspension est dégazée environ 15 minutes dans une enceinte sous vide (P ~ 200 mbar), afin d'éliminer les bulles d'air présentes au sein de la suspension. Cette étape permet d'améliorer la qualité de l'infiltration et du revêtement.

La dispersion colloïdale est alors prête pour réaliser l'électrophorèse.

### b) électrophorèse :

Le schéma du montage utilisé pour réaliser l'électrophorèse est illustré dans la figure 1. Il comprend une cuve 1, destinée à contenir la dispersion colloïdale 2, deux contre-électrodes 3, disposées sur deux parois opposées de la cuve, une électrode de travail, constituée par la préforme fibreuse 4 en fibres de carbone à infiltrer, et un générateur de tension 5 reliant les électrodes.

La présence des deux contre-électrodes, placées de part et d'autre de l'électrode de travail, permet une infiltration simultanée des deux côtés de la préforme fibreuse en carbone.

Dans notre exemple de réalisation, on utilise une préforme fibreuse qui a été élaborée au laboratoire à partir de fibres de carbone de référence Toray T300 ex-PAN selon un tissage interlock 2,5D. L'épaisseur de l'interphase de pyrocarbone (PyC) est d'environ 200 nm. Le diamètre des fibres est d'environ 8 µm. Le tissu de fibres de carbone ainsi obtenu a une épaisseur comprise entre 1 et 2 nm, une largeur d'environ 1 cm et une longueur d'environ 3 cm, et présente un volume de porosité compris entre 30 et 45%.

Avant d'installer la préforme fibreuse dans la cuve, elle est mise à tremper dans de l'éthanol absolu (solvant principal de la dispersion colloïdale) pendant une journée. Régulièrement, un traitement ultrasonique d'une quinzaine de minutes est appliqué afin d'éliminer les bulles d'air présentes dans le renfort. Ces différentes étapes préparatoires permettent d'améliorer la mouillabilité de la préforme, afin d'obtenir une infiltration électrophorétique maximale.

On verse la dispersion colloïdale dans la cuve afin que les contre-électrodes soient au moins partiellement immergées, puis la préforme fibreuse est lentement plongée dans la dispersion colloïdale.

Une fois en place, on applique une tension entre les contre-électrodes et l'électrode de travail pendant une durée allant de 1 à 10 minutes. Les tensions appliquées sont en général comprises entre 10 et 100 V/cm. Des tensions plus élevées sont possibles, mais cela conduit à une infiltration de moins bonne qualité.

Sous l'action du champ électrique, les particules chargées de SiC présentes dans la dispersion-colloïdale vont se déplacer vers la préforme de fibres de SiC, qui forme l'électrode de travail, et, dans le même temps, les molécules de polymère AHPCS, qui sont bien dissoutes dans la suspension, vont imprégner la préforme. On suppose que cette imprégnation est favorisée par le déplacement des particules de SiC, celles-ci entraînant avec elles une certaine quantité d'AHPCS à l'intérieur de la préforme.

Une fois le procédé électrophorétique terminé, la plaque infiltrée est, de préférence, rapidement placée dans une enceinte dont l'atmosphère est saturée en éthanol afin d'obtenir un séchage de la plaque. Cette étape de séchage permet de limiter la formation des fissures à la surface du revêtement.

### c) densification du composite :

La densification du composite est obtenue par pyrolyse du polymère précéramique, qui a été imprégné dans le renfort fibreux en carbone lors de l'électrophorèse et qui joue le rôle de précurseur de SiC.

Cette pyrolyse est réalisée dans un four chauffé jusqu'à 1600°C sous argon. En pratique, on peut également réaliser une première pyrolyse jusqu'à 1000°C sous balayage d'argon (P ~ Pₐₜₘ) dans un premierfouren appliquant une rampe de températures de 1°C/min jusqu'à 1000°C et un palier de 2 heures à 1000°C et une deuxième pyrolyse à 1600°C dans un autre four (plus précis à hautes températures), dans lequel on applique une rampe de température de 3,33°C/min jusqu'à 1600°C, avec un palier de 2 h à 1600°C.

La qualité de l'infiltration et de l'imprégnation est ensuite vérifiée par microscopie optique et par microscopie électronique à balayage, ainsi que par des mesures de densité par pycnométrie Hélium et méthode d'Archimède.

Le composite C_{f}/SiC élaboré selon le procédé décrit ci-dessus présente une porosité résiduelle de 26 % (soit un composite ayant une densité de 74%).

Les clichés de ce composite C_{f}/SiC obtenus par microscopie optique sont représentés dans la figure 2a et la figure 2b (correspondant à un grossissement x 5 d'une partie de la figure 2a).

On constate dans ces clichés que le SiC infiltre quasi-totalement la porosité inter-toron du renfort fibreux, mais qu'il n'a pas totalement infiltré la porosité intra-toron (les parties non infiltrées apparaissant en couleur claire dans la figure 2a et en couleur foncée dans la figure 2b). La porosité intra-toron non-infiltrée n'est pas due à un manque de mobilité électrophorétique des particules SiC, mais plutôt à la taille des particules relativement grandes du SiC utilisé (0,9 µm). Une densité plus importante pourrait être obtenue en utilisant des particules de tailles plus petites, par exemple 0,5 µm.

Selon une variante du procédé objet de l'invention, il est possible d'élaborer un revêtement à la surface du composite en rallongeant la durée de la phase électrophorétique du procédé. Un tel revêtement est représenté dans la figure 3, dans laquelle une partie du revêtement 7 a été retiré pour découvrir la préforme infiltrée et densifiée 6 sous-jacente. Ce revêtement 7 se compose de SiC (le même SiC que celui qui est présent à l'intérieur du renfort fibreux) et réduit la rugosité de surface du composite, ce qui est bénéfique pour les applications visées puisque la présence de ce revêtement facilite un contrôle dimensionnel des pièces C_{f}/SiC, ainsi qu'un contrôle thermo-hydraulique des pièces.

Il est à noter que le revêtement 7 représenté dans la figure 3 n'est pas exempt de défauts (fissures, cratères). La qualité du revêtement peut toutefois être améliorée en ajoutant un liant (par exemple du polyvinylbutyral) dans la formulation de la suspension colloïdale, la qualité du revêtement étant améliorée en optimisant la quantité du liant.

L'épaisseur du revêtement dépend de la durée de la phase électrophorétique du procédé. En effet, au début de cette phase, les particules de SiC vont combler les porosités internes du renfort en fibres de carbone. C'est ensuite, au cours de cette phase, que le revêtement va progressivement se former.

Il est à noter que cet aspect revêtement n'est jamais abordé dans la littérature relative à la fabrication de composites C_{f}/SiC. Cela vient probablement du fait que, dans la plupart des articles traitant de la fabrication de composites C_{f}/SiC par électrophorèse, l'accent est mis sur la qualité de l'infiltration. De plus, jusqu'à présent, l'électrophorèse n'était utilisée que pour infiltrer la poudre de SiC servant de remplissage au sein du renfort, et non pour élaborer entièrement un composite en une seule étape. A titre de comparaison, dans le procédé SITE-P, plusieurs étapes successives d'imprégnation sous vide du polymère sont effectuées après l'étape d'électrophorèse. Avec le procédé SITE-P, un revêtement ne pouvait donc pas être élaboré avant l'étape d'imprégnation du polymère sous vide.

### REFERENCES CITEES

**[1] Katoh et al.**
   « A Novel Processing Technique of Silicon Carbide-Based Ceramic Composites for High Temperature Applications », Advanced SiC/SiC Ceramic Composites : Developments and Applications in EnergySystems, Volume 144 (2002), p. 77-86
**[2] S. Novak, G.Dražić, K. König et A. Iveković**
   « Préparation of SiCf/SiC composites by the slip infiltration and transient eutectoid (SITE) process », Journal of Nuclear Materials 399 (2010), p 167-174
**[3] S. Novak et A. Iveković**
   « Fabrication of SiCf/SiC composites by SITE-P process », Journal of Nuclear Materials, 427 (2012), p 110-115
**[4] Greenwood R.**
   « Review of the measurement of zeta potentials in concentrated aqueous suspensions using electroacoustics », Advances in Colloid and Interface Science 106 (2003), p. 55-81

## Revendications

1. Procédé de fabrication d'une pièce en matériau composite à matrice céramique du type C_{f}/SiC qui comprend un renfort fibreux en carbone densifié par une matrice SiC, le procédé comprenant successivement :
a) une mise en contact d'une préforme de la pièce à fabriquer avec une dispersion colloïdale., la préforme comprenant des fibres de carbone et la dispersion colloïdale comprenant des particules de SiC de tailles submicrométriques ou nanométriques, dispersées dans au moins un solvant, et un précurseur liquide de céramique SiC ;
b) une infiltration, par électrophorèse, des particules de SiC et du précurseur de céramique SiC contenus dans la dispersion colloïdale, dans la préforme ;
c) une densification de la préforme infiltrée par traitement thermique pour décomposer le précurseur de céramique en céramique SiC, moyennant quoi on obtient la pièce en matériau composite à matrice céramique.

2. Procédé selon la revendication 1, comprenant en outre la préparation de la dispersion colloïdale, cette préparation comprenant successivement :
- la dispersion des particules de SiC dans un solvant dans lequel les particules de SiC sont dispersibles et dans lequel le précurseur liquide est soluble ; et
- la solubilisation du précurseur liquide dans ledit solvant.

3. Procédé selon la revendication 1, comprenant en outre la préparation de la dispersion colloïdale, cette préparation comprenant successivement :
- la dispersion des particules de SiC dans un mélange de deux solvants miscibles : un premier solvant dans lequel les particules de SiC sont dispersibles, et un deuxième solvant dans lequel le précurseur liquide est soluble ;
- la solubilisation du précurseur liquide dans le mélange de solvants comprenant les particules de SiC.

4. Procédé selon la revendication 3, dans lequel le premier solvant est l'éthanol et le second solvant est le toluène, les premier et deuxième solvants étant dans des proportions 55/45 en volume.

5. Procédé selon la revendication 2 ou 3, dans lequel la dispersion des particules de SiC dans le solvant dans lequel les particules de SiC sont dispersibles comprend :
- l'introduction, sous agitation, de tout ou partie des particules de SiC dans ledit solvant ;
- l'arrêt de l'agitation et l'application d'ultrasons audit solvant comprenant les particules de SiC ; et éventuellement
- l'arrêt des ultrasons et l'application d'une agitation magnétique audit solvant comprenant les particules de SiC ;
et, s'il reste des particules de SiC à introduire dans le solvant, la répétition une ou plusieurs fois de l'enchainement des opérations ci-dessus.

6. Procédé selon la revendication 2 ou 3, dans lequel la solubilisation du précurseur liquide dans le solvant dans lequel le précurseur liquide est soluble comprend :
- l'introduction, sous agitation, de tout ou partie du précurseur liquide dans ledit solvant ;
- l'arrêt de l'agitation et l'application d'ultrasons audit solvant ; et éventuellement
- l'arrêt des ultrasons et l'application d'une agitation magnétique audit solvant ;
et, s'il reste du précurseur liquide à introduire dans le solvant, la répétition une ou plusieurs fois de l'enchainement des opérations ci-dessus.

7. Procédé selon la revendication 5 ou 6, dans lequel l'application d'ultrasons est réalisée pendant une durée comprise entre 1 et 10 minutes, de préférence 5 minutes, à une puissance comprise entre 170 et 310 W et l'éventuelle application d'une agitation magnétique est réalisée en appliquant une vitesse d'agitation comprise entre 300 et 600 tours/minute pendant une durée comprise entre 30 et 90 minutes, de préférence à température ambiante.

8. Procédé selon la revendication 1, dans lequel la dispersion colloïdale comprend, en pourcentages massiques rapportés à la masse totale de la dispersion, 40 à 60% de particules de SiC, de préférence 50 à 55%.

9. Procédé selon la revendication 1, dans lequel la dispersion colloïdale est dégazée dans une enceinte sous vide, afin d'éliminer des bulles d'air présentes au sein de la suspension.

10. Procédé selon la revendication 1, dans lequel l'étape b) d'infiltration par électrophorèse comprend l'application d'une tension entre 10 et 100 V/cm pendant une durée allant de 1 à 10 minutes.

11. Procédé selon la revendication 1, comprenant en outre, avant l'étape a), une étape de mise en contact de la préforme avec ledit au moins un solvant pendant au moins 12 heures.

12. Procédé selon la revendication 1, dans lequel l'étape c) de densification partraitement thermique comprend une pyrolyse réalisée à une température comprise entre 1400 et 1700°C et pendant une durée comprise entre 1 et 3 heures.

13. Procédé selon la revendication 12, dans lequel la température de la pyrolyse est atteinte en chauffant la préforme infiltrée à une vitesse comprise entre 0,5°C/min et 4°C/min.

14. Procédé selon la revendication 13, dans lequel la pyrolyse est réalisée à une température de 1600°C, la température de pyrolyse étant atteinte en chauffant la préforme infiltrée à une vitesse de 1°C/min.

15. Procédé selon la revendication 1, dans lequel une durée de l'étape d'infiltration est augmentée de manière à obtenir un revêtement en surface du renfort.

## Patentansprüche

1. Verfahren zur Herstellung eines Bauteils aus Verbundmaterial mit keramischer C_{f}/SiC-Matrix, umfassend eine Verstärkungsfaser aus Kohlenstoff, verdichtet durch eine SiC-Matrix, wobei das Verfahren aufeinanderfolgend umfasst:
a) In-Kontakt-bringen einer Vorform des herzustellenden Bauteils mit einer kolloidalen Dispersion, wobei die Vorform Kohlenstofffasern umfasst und die kolloidale Dispersion SiC-Teilchen mit Submikrometer- oder Nanometergrößen, dispergiert in mindestens einem Lösungsmittel, und einen flüssigen Vorläufer von keramischem SiC, umfasst;
b) Infiltration durch Elektrophorese der SiC-Teilchen und des Vorläufers von keramischem SiC, welche in der kolloidalen Dispersion enthalten sind, in die Vorform;
c) Verdichtung der infiltrierten Vorform durch thermische Behandlung zum Zersetzen des Vorläufers der Keramik in keramisches SiC, wodurch das Bauteil aus keramischem Verbundmaterial mit keramischer Matrix erhalten wird.

2. Verfahren nach Anspruch 1, weiterhin umfassend die Herstellung der kolloidalen Dispersion, wobei die Herstellung aufeinanderfolgend umfasst:
- Dispergieren der SiC-Teilchen in einem Lösungsmittel, in welchem die SiC-Teilchen dispergierbar sind und in welchem der flüssige Vorläufer löslich ist; und
- Solubilisieren des flüssigen Vorläufers in dem Lösungsmittel.

3. Verfahren nach Anspruch 1, weiterhin umfassend die Herstellung der kolloidalen Dispersion, wobei die Herstellung aufeinanderfolgend umfasst:
- Dispergieren der SiC-Teilchen in einem Gemisch aus zwei mischbaren Lösungsmitteln: ein erstes Lösungsmittel, in welchem die SiC-Teilchen dispergierbar sind, und ein zweites Lösungsmittel, in welchem der flüssige Vorläufer löslich ist;
- Lösen des flüssigen Vorläufers in einem Lösungsmittelgemisch, das die SiC-Teilchen umfasst.

4. Verfahren nach Anspruch 3, worin das erste Lösungsmittel Ethanol ist und das zweite Lösungsmittel Toluol ist, wobei das erste und das zweite Lösungsmittel in einem Verhältnis von 55/45 bezüglich des Volumens sind.

5. Verfahren nach Anspruch 2 oder 3, worin das Dispergieren der SiC-Teilchen in dem Lösungsmittel, in welchem die SiC-Teilchen dispergierbar sind, umfasst:
- Einführen aller oder eines Teils der SiC-Teilchen unter Rühren in das Lösungsmittel;
- Beenden des Rührens und Anwendung von Ultraschall auf das Lösungsmittel, das die SiC-Teilchen umfasst; und gegebenenfalls
- Beenden der Anwendung von Ultraschall und Anwendung von magnetischem Rühren des Lösungsmittels, das die SiC-Teilchen umfasst;
und, falls einzuführende SiC-Teilchen in dem Lösungsmittel verbleiben, ein- oder mehrfache Wiederholung der oben genannten Reihe von Schritten.

6. Verfahren nach Anspruch 2 oder 3, worin die Solubilisierung des flüssigen Vorläufers in dem Lösungsmittel, in welchem der flüssige Vorläufer löslich ist, umfasst:
- Einführen des gesamten oder eines Teils des flüssigen Vorläufers unter Rühren in das Lösungsmittel;
- Beenden des Rührens und Anwenden von Ultraschall auf das Lösungsmittel; und gegebenenfalls
- Beenden der Anwendung von Ultraschall und Anwendung von magnetischem Rühren des Lösungsmittels, das die SiC-Teilchen umfasst;
und, falls flüssige Vorläufer, die einzuführen sind, in dem Lösungsmittel verbleiben, die ein- oder mehrfache Wiederholung der obigen Reihe von Schritten.

7. Verfahren nach Anspruch 5 oder 6, worin die Anwendung von Ultraschall für eine Dauer, umfassend zwischen 1 und 10 Minuten erfolgt, vorzugsweise 5 Minuten, bei einer Leistung, umfassend zwischen 170 und 310 Watt, und worin die gegebenenfalls erfolgende Anwendung von magnetischem Rühren unter Verwendung einer Rührgeschwindigkeit zwischen 300 und 600 Umdrehungen/Minute für eine Dauer, umfassend zwischen 30 und 90 Minuten, erfolgt, vorzugsweise bei Raumtemperatur.

8. Verfahren nach Anspruch 1, worin die kolloidale Dispersion in Masseprozent, bezogen auf die Gesamtmasse der Dispersion, 40 bis 60 % SiC-Teilchen, vorzugsweise 50 bis 55 %, umfasst.

9. Verfahren nach Anspruch 1, worin die kolloidale Dispersion entgast wird in einer Vakuumkammer, um Luftblasen, die in der Suspension vorliegen, zu entfernen.

10. Verfahren nach Anspruch 1, worin Schritt b) der Infiltration durch Elektrophorese die Anwendung einer Spannung zwischen 10 und 100 V/cm für eine Dauer von 1 bis 10 Minuten umfasst.

11. Verfahren nach Anspruch 1, weiterhin umfassend, vor Schritt a), einen Schritt des In-Kontakt-bringens der Vorform mit dem mindestens einen Lösungsmittel für mindestens 12 Stunden.

12. Verfahren nach Anspruch 1, worin der Schritt c) des Verdichtens durch thermische Behandlung eine Pyrolyse umfasst, die bei einer Temperatur erfolgt, umfassend zwischen 1400 °C und 1700 °C, und für eine Zeitdauer, umfassend zwischen 1 und 3 Stunden.

13. Verfahren nach Anspruch 12, worin die Pyrolysetemperatur erreicht wird durch Erwärmen der infiltrierten Vorform mit einer Geschwindigkeit zwischen 0,5 °C/min und 4 °C.

14. Verfahren nach Anspruch 13, worin die Pyrolyse bei einer Temperatur von 1600 °C erfolgt, wobei die Pyrolysetemperatur erreicht wird durch Erwärmen der infiltrierten Vorform mit einer Geschwindigkeit von 1 °C/min.

15. Verfahren nach Anspruch 1, worin eine Dauer des Infiltrationsschritts so erhöht wird, um eine verstärkende Oberflächenbeschichtung zu erhalten.

## Claims

1. Method for manufacturing a part made from a ceramic matrix composite material of the C_{f}/SiC type, which comprises a carbon fibre reinforcement densified by a SiC matrix, the method successively comprising:
a) putting a preform of the part to be manufactured in contact with a colloidal dispersion, the preform comprising carbon fibres and the colloidal dispersion comprising SiC particles of submicrometric or nanometric sizes, dispersed in at least one solvent, and a liquid SiC ceramic precursor;
b) an infiltration, by electrophoresis, of the SiC particles and of the SiC ceramic precursor contained in the colloidal dispersion, in the preform;
c) densifying the infiltrated preform by heat treatment in order to decompose the ceramic precursor into SiC ceramic, whereby the part made of ceramic matrix composite material is obtained.

2. Method according to claim 1, further comprising the preparation of the colloidal dispersion, this preparation successively comprising:
- dispersion of the SiC particles in a solvent in which the SiC particles can be dispersed and in which the liquid precursor is soluble; and
- solubilisation of the liquid precursor in said solvent.

3. Method according to claim 1, further comprising the preparation of the colloidal dispersion, this preparation successively comprising:
- dispersion of the SiC particles in a mixture of two miscible solvents: a first solvent in which the SiC particles can be dispersed, and a second solvent in which the liquid precursor is soluble;
- solubilisation of the liquid precursor in the mixture of solvents comprising the SiC particles.

4. Method according to claim 3, wherein the first solvent is ethanol and the second solvent is toluene, the first and second solvents being in proportions 55/45 by volume.

5. Method according to claim 2 or 3, wherein the dispersion of the SiC particles in the solvent in which the SiC particles can be dispersed comprises:
- introducing, under stirring, all or a portion of the SiC particles into said solvent;
- stopping the stirring and applying ultrasound to said solvent comprising the SiC particles; and possibly
- stopping the ultrasounds and applying a magnetic stirring to said solvent comprising the SiC particles;
and, if there are still any SiC particles to be introduced into the solvent, repeating the concatenation of the above operations one or more times.

6. Method according to claim 2 or 3, wherein the solubilisation of the liquid precursor in the solvent in which the liquid precursor is soluble comprises:
- introducing, under stirring, all or a portion of the liquid precursor into said solvent;
- stopping the stirring and applying ultrasound to said solvent; and possibly
- stopping the ultrasounds and applying a magnetic stirring to said solvent;
and, if there is still any liquid precursor to be introduced into the solvent, repeating the concatenation of the above operations one or more times.

7. Method according to claim 5 or 6, wherein the application of the ultrasounds is carried out for a duration between 1 and 10 minutes, preferably 5 minutes, at a power between 170 and 310 W and the optional application of a magnetic stirring is carried out by applying a stirring speed between 300 and 600 rpm for a duration between 30 and 90 minutes, preferably at ambient temperature.

8. Method according to claim 1, wherein the colloidal dispersion comprises, by mass percentages with respect to the total mass of the dispersion, 40 to 60% of SiC particles, preferably 50 to 55%.

9. Method according to claim 1, wherein the colloidal dispersion is degassed in a vacuum chamber, in order to remove the bubbles of air present within the suspension.

10. Method according to claim 1, wherein step b) of infiltration by electrophoresis comprises the application of a voltage between 10 and 100 V/cm for a duration ranging from 1 to 10 minutes.

11. Method according to claim 1, further comprising, before step a), a step of putting the preform in contact with said at least one solvent for at least 12 hours.

12. Method according to claim 1, wherein step c) of densifying by heat treatment comprises a pyrolysis carried out at a temperature between 1400 and 1700°C and for a duration between 1 and 3 hours.

13. Method according to claim 12, wherein the temperature of the pyrolysis is reached by heating the infiltrated preform at a speed between 0.5°C/min and 4°C/min.

14. Method according to claim 13, wherein the pyrolysis is carried out at a temperature of 1600°C, the pyrolysis temperature being reached by heating the infiltrated preform at a speed of l°C/min.

15. Method according to claim 1, wherein a duration of the infiltration step is increased in such a way as to obtain a coating at the surface of the reinforcement.
